# EUROPÄISCHE PATENTANMELDUNG

(11) **EP 1 702 818 A2**
(43) Veröffentlichungstag der Anmeldung: **20.09.2006**
(21) Anmeldenummer: 06005312.1
(22) Anmeldetag: 15.03.2006
(51) Int. Cl.: B60R 25/00, G11B 5/008

(54) **Schlüsselsystem mit Speichermedium**

(30) Priorität: 17.03.2005 DE 202005004370 U
(71) Anmelder: Brandmayr, Jakob M., 82319 Starnberg (DE)
(72) Erfinder: Brandmayr, Jakob M., 82319 Starnberg (DE)
(74) Vertreter: Kador & Partner

(57) **Zusammenfassung**

Die vorliegende Erfindung betrifft ein System bestehend aus einem Schlüssel mit gleichzeitiger Datenspeicherfunktion. Des Weiteren umfasst die Erfindung einen Adapter und ein Lesegerät, die es ermöglichen, die Daten auf dem Speichermedium schnell und unkompliziert auszuwerten und wieder zu geben.

## Beschreibung

Die vorliegende Erfindung betrifft ein System, welches einen Schlüssel umfasst und gleichzeitig als Speichermedium dienen kann. Des Weiteren umfasst die Erfindung einen Adapter und ein Lesegerät, die es ermöglichen, die Daten auf dem Speichermedium schnell und unkompliziert auszuwerten und wieder zu geben.

Sanitäter treffen bei Noteinsätzen des öfteren auf Patienten, die nicht mehr ansprechbar sind. Dies ist insbesondere bei schweren Verkehrsunfällen der Fall. Dabei bleibt der Sanitäter nicht nur möglicherweise im Ungewissen über den Namen und z. B. das Alter des Verunglückten, sondern auch über lebenswichtige Informationen wie Blutgruppe oder ob der Patient an chronischen Erkrankungen leidet oder sensibel auf bestimmte Pharmaka reagiert. Dieser Mangel an Information schränkt die Handlungsfähigkeit des Arztes unnötigerweise ein und erschwert eine schnelle Erstversorgung, die bei Zugang der lebenswichtigen Daten deutlich verbessert werden könnte.

Es ist daher Aufgabe der vorliegenden Erfindung, ein System, Adapter und Lesegerät bereitzustellen, die es ermöglichen, alle lebensnotwendigen Daten eines Patienten schnell und unkompliziert am Unfallort bereit zu halten.

Der Erfindung liegt die Erkenntnis zugrunde, dass die Aufgabe dadurch gelöst werden kann, dass das Speichermedium zusammen mit dem Schlüssel, insbesondere Autoschlüssel, verbunden ist.

Die Erfindungsgemäße Aufgabe wird durch ein System gelöst, welches einen Schlüssel, insbesondere einen Autoschlüssel, und ein Speichermedium umfasst, wobei das Speichermedium dem System entnehmbar ist. Der Vorteil dieses Systems ist es, dass der Arzt am Unfallort schnell zu den lebensnotwendigen Informationen gelangen kann, die sich auf dem Speichermedium befinden. Das Speichermedium ist dem System leicht entnehmbar und dadurch können die Daten auf dem Speichermedium schnell und leicht abgerufen werden.

In einer Ausführungsform umfasst das System einen Schlüssel sowie einen Schlüsselanhänger (z.B. Schlüsselring), wobei der Schlüsselanhänger es ermöglicht, dass Speichermedium mit dem Schlüssel zu verbinden, d.h. Schlüssel und Speichermedium sind am Schlüsselanhänger befestigt.

In einer weiteren Ausführungsform befindet sich das Speichermedium direkt am Schlüssel. Denkbar ist, dass das Speichermedium in den Schlüssel eingeschoben werden kann.

Auf dem Speichermedium werden die notwendigen Daten optisch, magnetisch oder mechanisch gespeichert. Vorzugsweise ist das Speichermedium ein Chip. Allerdings könnte das Speichermedium auch ein Magnetstreifen oder ein optischer Datenspeicher sein, wie z. B. in einer CD/DVD realisiert. Das Speichermedium umfasst insbesondere Informationen über den Inhaber des Speichermediums, wie Name und Photo des Inhaber, sowie alle notwendigen, medizinischen Daten. Insbesondere umfasst das Speichermedium die medizinischen Daten über Blutgruppe, Allergien und sonstige, chronische Erkrankungen.

Vorzugsweise hat das Speichermedium eine Länge von 0,3 bis 1,4 cm, eine Breite von 0,3 bis 1,1 cm und eine Dicke von 0,03 bis 1,0 cm.

Wie oben ausgeführt muss das Speichermedium dem System entnehmbar sein, damit es ausgewertet werden kann. Denkbar ist aber auch, dass eine Auswertung des Speichermediums durchgeführt werden kann, ohne es aus dem System zu entfernen. Das Speichermedium sollte nicht nur vorzugsweise entnehmbar sein, sondern auch nach Gebrauch wieder dem System zurückgeführt werden können. Dies ermöglicht, dass die auf dem Speichermedium gespeicherten Daten ständig erneuert und den gegebenen Umständen angepasst werden kann.

Vorzugsweise wird das Speichermedium nicht als solches zugeführt und/oder entnommen, sondern auf ein Trägerelement aufgebracht. Nachdem ein Speichermedium in der Regel kleindimensioniert ist, ermöglicht das Trägerelement eine leichtere Handhabung, insbesondere ist die Entnahme und Zufuhr des Speichermediums in das System dadurch vereinfacht. Vorzugsweise ist das Speichermedium in das Trägerelement passgenau eingesetzt, d.h. dass das Speichermedium insbesondere so in das Trägerelement einsetzbar ist, dass es sich nicht aus den Ebenen des Trägerelements hervorhebt sondern mit dem Trägerelement eine einheitliche, ebene Fläche bildet.

Vorzugsweise hat das Trägerelement eine Länge von 0,4 bis 3,5 cm, eine Breite von 0,4 bis 2,5 cm und eine Dicke von 0,04 bis 1,1 cm.

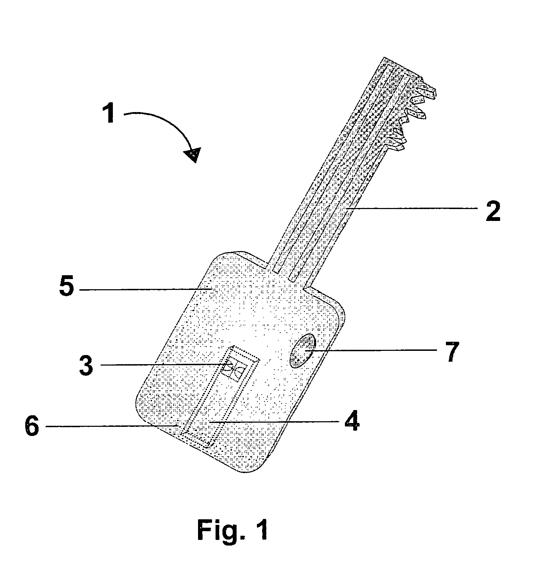

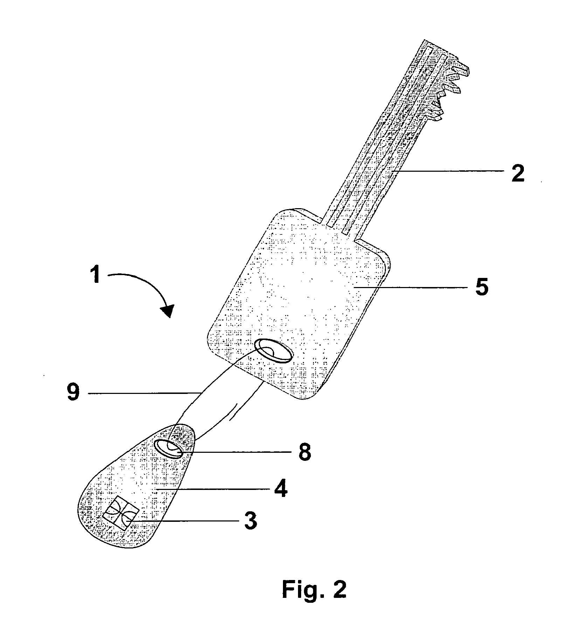

Im Folgenden werden zwei Ausführungsformen genauer beschrieben, wobei auf die Figuren 1 und 2 Bezug genommen wird.

Figur 1 stellt eine perspektivische Zeichnung der ersten Ausführungsform dar.

Figur 2 stellt eine schematische Darstellung der zweiten Ausführungsform dar.

In Figur 1 ist ein System 1 dargestellt, dem das Speichermedium 3 in den Schlüssel 2 integriert worden ist. Das Speichermedium 3 kann an jeder Stelle im Schlüssel 2 untergebracht werden, vorzugsweise wie hier ausgeführt ist das Speichermedium 3 in der Schlüsselreide 5 untergebracht. Dabei weist die Schlüsselreide 5 eine Aufnahmeeinheit 6 auf. Denkbar ist, dass das Speichermedium 3 in die Aufnahmeeinheit 6 eingelegt werden kann. Jedoch ist es bevorzugt, dass die Aufnahmeeinheit 6 einen Schlitz in der Schlüsselreide 5 darstellt, in der das Speichermedium 3 eingeschoben werden kann. Dies hat den Vorteil, dass das Speichermedium 3 vor Verschmutzung oder Verkratzung gut geschützt ist. Das Speichermedium 3 ist in dieser Ausführungsform auf ein Trägerelement 4, wie oben definiert, aufgebracht. Dadurch kann das Speichermedium 3 mittels Trägerelement 4 leicht in den Schlitz 6 in der Schlüsselreide 5 eingeschoben werden. Das Speichermedium 3 auf dem Trägerelement 4 kann unter anderem durch Druck auf das Trägerelement 4 entnommen werden. Denkbar dabei ist, dass durch Druck auf das Trägerelement 4 das Trägerelement 4 mit Speichermedium 3 aus dem Schlitz 6 springt.

In einer alternativen Ausführungsform wird nicht Druck auf das Trägerelement 4 ausgeübt, sondern Druck direkt auf das Speichermedium 3 ausgeübt, um das Speichermedium 3, evtl. mit dem Trägerelement 4, von der Schlüsselreide 5 zu lösen.

In einer weiteren alternativen Ausführungsform weist der Schlüssel 2 insbesondere in der Schlüsselreide 5 eine Druckvorrichtung 7 auf, bei dessen Betätigung das Speichermedium 3 und/oder Trägerelement 4 die Aufnahmeeinheit 6, insbesondere den Schlitz 6, zumindest teilweise verlässt und dadurch das Speichermedium 3 entnehmbar ist. Solch eine Anordnung ermöglicht eine besonders leichte Entnahme des Speichermediums 3.

Für die zweite allgemeine Ausführungsform wird auf Figur 2 verwiesen. In der zweiten Ausführungsform ist das Speichermedium 3 auf dem Trägerelement 4 aufgebracht. Vorzugsweise ist das Trägerelement 4 eine planare, ebene Fläche, in der das Speichermedium 3 planeben mit der ebenen Fläche des Trägerelements 4 abschließt. Ferner wird der Chip in einer bevorzugten Ausführungsform durch eine Folie, möglicherweise eine Selbstklebefolie, vor Beschädigung geschützt. Sofern das Auslesen der Daten auf dem Chip dies erfordert, ist es somit leicht möglich, die Schutzfolie von dem Trägerelement abzuziehen. Dieses Trägerelement 4 besitzt eine Befestigungseinrichtung 8, die vorzugsweise ein Loch ist. Durch dieses Loch kann ein Schlüsselring 9 gezogen werden, wobei der Schlüsselring 9 mit dem Schlüssel 2 in Verbindung steht. Vorzugsweise weist der Schlüssel 2 in seiner Schlüsselreide 5 ebenfalls ein Loch auf, durch das der Schlüsselring 9 geführt werden kann. Im Notfall kann nun z. B. der Arzt das Speichermedium 3 mit Trägerelement 4 leicht vom Schlüsselring ziehen und somit unkompliziert an die Daten gelangen.

Beiden Ausführungsformen ist gemein, dass durch leichte Entnahme des Speichermediums 3 aus dem System 1, der Arzt das Speichermedium handbar werden kann und dieses in eine Leseeinheit zugeführt werden kann, wodurch der Arzt unkompliziert die notwendigen Daten abfragen kann.

Die vorliegende Erfindung stellt nicht nur ein System bereit, welches eine leichte Entnahme eines Speichermediums ermöglicht, sondern auch einen Adapter, durch den gewährleistet werden kann, dass das Speichermedium einem Lesegerät leicht zugeführt werden kann.

Diese Aufgabe wird durch einen Adapter gelöst, der zumindest eine ebene Fläche umfasst, wobei die ebene Fläche eine Vertiefung aufweist, die als Aufnahmeeinheit für das Trägerelement mit Speichermedium dient, wobei die Vertiefung so ausgestaltet ist, dass das Trägerelement mit dem Speichermedium passgenau in die Vertiefung einlegbar ist, und die die Vertiefung umgebene Fläche mit dem Trägerelement mit Speichermedium planeben abschließt, wobei der Adapter vorzugsweise eine Länge von 8 bis 10 cm, eine Breite von 5 bis 6 cm und eine Dicke von 0,05 bis 1,2 cm besitzt. Vorzugsweise hat der Adapter die Dimensionen einer herkömmlichen Krankenversicherungschipkarte. Dem Adapter wird vorzugsweise ein Speichermedium oder ein Speichermedium mit Trägerelement zugeführt, wie oben beschrieben.

Es ist bevorzugt, aber nicht ausschließlich notwendig, dass der Adapter eine Abdeckfolie umfasst, mit der das Trägerelement mit Speichermedium abdeckbar ist. Dabei ist bevorzugt, dass die Abdeckfolie durchsichtig ist und die Abdeckfolie Adhäsionseigenschaften aufweist, so dass, wenn das Speichermedium durch die Folie abgedeckt ist, dieses auch nicht verrutschen kann. Des Weiteren ist bevorzugt, dass die Abdeckfolie wieder abziehbar ist, so dass das Speichermedium aus dem Adapter entfern werden kann.

In einer alternativen Ausführungsform besitzt die Abdeckfolie eine Öffnung, etwa in Größe des rechteckigen Chips, damit die Daten ausgelesen werden können, ohne die Folie abnehmen zu müssen.

Schließlich wird in einer weiteren bevorzugten Form die Chip-Haltefolie des Adapters auf der gegenüberliegenden Seite der Adapterfläche so fixiert, dass keine Behinderungen, etwa durch "Eselsohren" an den Ecken der Folie, beim Einführen des Adapters in das Lesegerät erfolgen können.

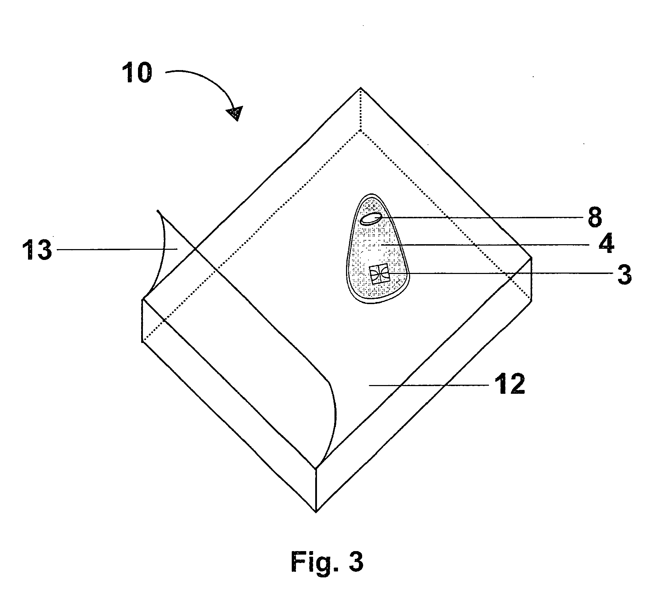

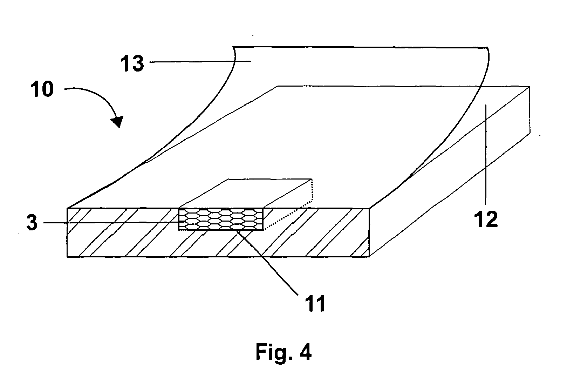

Im Weiteren wird auf Figur 3 und 4 Bezug genommen, die einen Adapter mit einem Speichermedium auf dem Trägerelement wiedergeben.

Figur 3 stellt eine perspektivische Darstellung des Adapters dar.

Figur 4 gibt einen Querschnitt durch den Adapter wieder.

In Figur 3 erkennt man einen Adapter 10 mit einer ebenen Fläche 12. Diese ebene Fläche 12 weist eine Vertiefung 11 auf, die als Aufnahmeeinheit für das Trägerelement 4 mit Speichermedium 3 dient, wobei die Vertiefung 11 so ausgestaltet ist, dass das Trägerelement 4 mit Speichermedium 3 passgenau in die Vertiefung 11 einlegbar ist und die die Vertiefung 11 umgebende Fläche mit dem Trägerelement 4 mit Speichermedium 3 planeben abschließt. In einer bevorzugten Form hat dieser Adapter eine Länge von 8 bis 9 cm, eine Breite von 5 bis 6 cm und eine Dicke von 0,05 bis 1,2 cm.

Des Weiteren weist der Adapter 10 in dieser Ausführungsform vorzugsweise eine Abdeckfolie 13 auf, die an einer Kante des Adapters angebracht ist und die vorzugsweise die Größe des Adapters 10 aufweist. Diese Abdeckfolie 13 wird nach Einlegen des Trägerelements 4 mit Speichermedium 3 über das Trägerelement 4 mit Speichermedium 3 gelegt, so dass ein Verrutschen des Trägerelements 4 verhindert wird. Die Vertiefung 11 im Adapter 10 ist vorzugsweise so angebracht, dass das Speichermedium an der Position zu liegen kommt, wie in herkömmlichen Krankenkassenchipkarten.

In einer bevorzugten Version wird das Trägerelement 4 so eingelegt, dass der Chip im rechten Winkel zum Lesegerät positioniert wird. Somit können die Standardlesegeräte die Daten aufnehmen. Diese Anordnung ermöglicht es, dass der Adapter in jedes herkömmliche Lesegerät für Krankenkassenchipkarten eingeführt werden kann und die Daten leicht abgerufen werden können. Vorzugsweise befindet sich der Mittelpunkt des Speichermediums 3 ca. 1,5 cm von der Querkante des Adapters sowie ca. 2,25 cm von dessen Längskante.

Die vorliegende Erfindung umfasst des Weiteren ein Lesegerät, dass es ermöglicht, das Speichermedium, welches sich mittels Trägerelement auf dem Adapter befindet, zu lesen. Dabei umfasst das Lesegerät eine Aufnahmeeinheit für den Adapter, wie oben beschrieben, sowie eine Leseeinheit für das Abfragen der Daten auf dem Speichermedium im Adapter, eine Datenverarbeitungseinheit sowie eine Datenausgabeeinheit. Vorzugsweise ist die Datenausgabeeinheit ein Drucker und/oder Bildschirm.

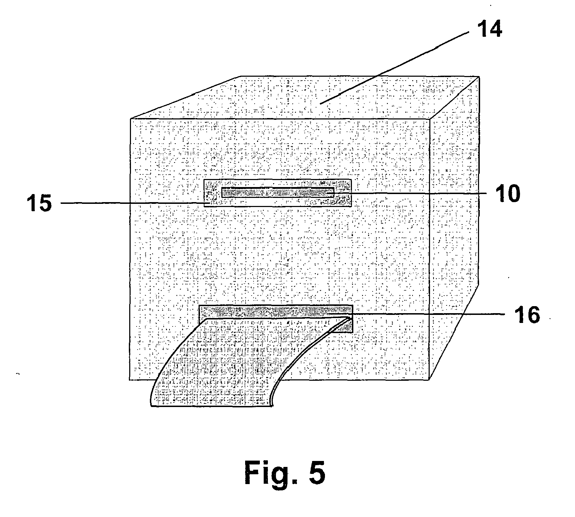

Im Folgenden wird auf Figur 5 Bezug genommen.

In Figur 5 ist ein Lesegerät 14 zu erkennen, welches eine Aufnahmeeinheit 15 umfasst für einen Adapter 10, wie oben beschrieben, sowie eine Leseeinheit für das Abfragen der Daten auf dem Speichermedium 3 im Adapter 10, sowie eine Datenausgabeeinheit 16. Die Datenausgabeeinheit 16 ist im vorliegenden Fall ein Drucker. Des Weiteren weist das Lesegerät 14 eine Aufnahmeeinheit 15 auf, die es ermöglicht, den Adapter 10 in das Lesegerät 14 einzuführen, sowie zu entnehmen. Nach Figur 5 ist die Aufnahmeeinheit 15 ein Schlitz.

Die Erfindung umfasst des Weiteren ein Verfahren zum Abrufen der Informationen, wobei das Speichermedium, vorzugsweise auf einem Trägerelement aufgebracht, dem System, wie oben beschrieben, entfernt und dem Adapter zugeführt wird und schließlich der Adapter dem Lesegerät zugeführt wird, in dem es zur Auswertung der gespeicherten Informationen auf dem Speichermedium kommt.

### Bezugszeichenliste

- 1: System
- 2: Schlüssel
- 3: Speichermedium
- 4: Trägerelement
- 5: Schlüsselreide
- 6: Schlitz (Aufnahmeeinheit)
- 7: Druckvorrichtung
- 8: Loch (Befestigungsmöglichkeit)
- 9: Schlüsselring
- 10: Adapter
- 11: Vertiefung
- 12: ebene Fläche
- 13: Folie
- 14: Lesegerät
- 15: Aufnahmeeinheit
- 16: Datenausgabeeinheit (Drucker und/oder Bildschirm)

## Patentansprüche

1. System (1), umfassend einen Schlüssel (2), insbesondere einen Autoschlüssel, und ein Speichermedium (3), wobei das Speichermedium (3) dem System (1) entnehmbar ist.

2. System (1) nach Anspruch 1, **dadurch gekennzeichnet, dass** das Speichermedium (3) eine Länge von 0,3 bis 1,4 cm, eine Breite von 0,3 bis 1,1 cm und eine Dicke von 0,03 bis 1.

3. System (1) nach einen der Ansprüche 1 oder 2, **dadurch gekennzeichnet, dass** das Speichermedium (3) Informationen über den Inhaber des Speichermediums (3), insbesondere Name und Photo des Inhabers, sowie dessen medizinische Daten, enthält.

4. System (1) nach einem der Anspruch 1 bis 3, **dadurch gekennzeichnet, dass** der Schlüssel (2) in der Schlüsselreide (5) eine Aufnahmeeinheit (6) für das Speichermedium (3) aufweist und das Speichermedium (3) dieser Aufnahmeeinheit (6) entnehmbar ist.

5. System (1) nach einen der Ansprüche 1 bis 4, **dadurch gekennzeichnet, dass** das Speichermedium auf ein Trägerelement (4) aufgebracht ist und das Trägerelement (4) eine Befestigungseinrichtung (8) besitzt über die sie mit dem Schlüssel (2) verbindbar ist.

6. Adapter (10) umfassend zumindest eine ebene Fläche (12) umfassend eine Vertiefung (11) in der ebenen Fläche (12) als Aufnahmeeinheit für ein Trägerelement (4) mit Speichermedium (3), wobei die Vertiefung (11) so ausgestaltet ist, dass das Trägerelement (4) mit Speichermedium (3) passgenau in die Vertiefung (11) einlegbar ist, und die die Vertiefung (11) umgebende ebene Fläche (12) mit dem Trägerelement (4) mit Speichermedium (3) planeben abschließt, wobei der Adapter (10) eine Länge von 8 bis 9 cm, eine Breite von 5 bis 6 cm und eine Dicke von 0,05 bis 1,2 cm besitzt.

7. Adapter (10) nach Anspruch 6, **dadurch gekennzeichnet, dass** die Vertiefung (11) so ausgestaltet ist, ein Trägerelement (4) einer Länge von 0,4 bis 3,5 cm, einer Breite von 0,4 bis 2,5 cm und einer Dicke von 0,04 bis 1,1 cm passgenau aufzunehmen.

8. Adapter (10) nach einem der Ansprüche 6 oder 7, **dadurch gekennzeichnet, dass** das Speichermedium (3) eine Länge von 0,3 bis 1,4 cm, eine Breite von 0,3 bis 1,1 cm und eine Dicke von 0,03 bis 1 cm besitzt und in das Trägerelement (4) passgenau eingesetzt ist.

9. Adapter (10) nach einem der Ansprüche 6 bis 8, **dadurch gekennzeichnet, dass** das Speichermedium (3) Informationen über den Inhaber des Speichermediums (3), insbesondere Name und Photo des Inhabers, sowie dessen medizinische Daten, erhält.

10. Lesegerät (14) umfassend eine Aufnahmeeinheit (15) für einen Adapter (10) nach einem der Ansprüche 6 bis 9, eine Leseeinheit für das Abfragen der Daten auf dem Speichermedium (3) im Adapter (10), eine Datenverarbeitungseinheit, sowie eine Datenausgabeeinheit (16).
